# EUROPÄISCHE PATENTANMELDUNG

(11) **EP 0 774 483 A2**
(43) Veröffentlichungstag der Anmeldung: **21.05.1997**
(21) Anmeldenummer: 96117904.1
(22) Anmeldetag: 08.11.1996
(51) Int. Cl.: C08J 3/18

(54) **Plastisole auf der Grundlage von durch Weichmacherzusatz weichgemachte Polymermassen**

(30) Priorität: 16.11.1995 DE 19542746
(71) Anmelder: Röhm GmbH, 64293 Darmstadt (DE)
(72) Erfinder: Denkinger, Peter, Dr., Kendall Park, NJ 08824 (US); Elser, Wilhelm, 64347 Griesheim (DE)

(57) **Zusammenfassung**

Die Erfindung betrifft durch Weichmacherzusatz weichgemachte, thermisch verfilmbare Polymermassen, die neben an sich üblichen Weichmachern noch Füll- und Zuschlagstoffe enthalten können, wobei die thermisch verfilmbaren Polymermassen aus einem in Suspensionspolymerisation hergestellten, mechanisch zerkleinerten Perlpolymerisat bestehen.

## Beschreibung

### Gebiet der Erfindung

Die Erfindung betrifft Plastisole auf der Grundlage von durch Weichmacherzusatz weichgemachten Polymermassen, die in Form mechanisch zerkleinerter Polymerperlen eingesetzt wurden.

### Stand der Technik

Plastisole, d.h. zweiphasige Systeme bestehend aus Kunststoff- bzw. Kunstharzteilchen und einem geeigneten Weichmacher, sind theoretisch aus den verschiedensten Kunststoffen herstellbar, die technische Anwendung blieb aber bislang auf wenige Polymersysteme beschränkt. Die bislang technisch bedeutsamsten Plastisole werden auf der Grundlage von PVC hergestellt (vgl. Ullmann's Encyclopedia of Industrial Chemistry, 5th Ed. Vol. A21, pg. 734 - 737, VCH 1992; Becker-Braun, Kunststoff-Handbuch, 2. Auflage, Bd. 2/2, pg. 1077-1090, C. Hanser 1986; H.F. Mark et al. Ed. Encyclopedia of Polymer Science & Engineering, 2nd. Ed. Supplem. Vol. pp. 568 - 643, Wiley-Interscience 1989).
Aber auch Plastisole auf Acrylatbasis, sogenannte PAMA-Plastisole stehen der Praxis schon seit einiger Zeit zur Verfügung (vgl. DE-PS 934 498, FR-A 2,291,248). Der letztgenannte Stand der Technik baut auf der Erkenntnis auf, daß es zur Herstellung technisch akzeptabler PAMA-Plastisole der Abstimmung von Glastemperatur Tg, Teilchengröße und Zusammensetzung der Polymerpartikel einerseits und speziellen Weichmachern andererseits bedarf.

Dabei wird die Regel aufgestellt, daß die durchschnittliche Korngröße des Polymerisats umso größer sein solle, je niedriger dessen Glastemperatur Tg liege. Die durchschnittliche Korngröße des eingesetzten Polymeren muß gemäß der FR-A zwischen 0,1 µm und 500 µm, und soll vorzugsweise zwischen 0,3 und 20 µm liegen. Als geeignete Primärteilchen werden sowohl suspensionspolymerisierte als auch emulsionspolymerisierte Acrylpolymere angegeben.

Die DE-A 25 43 542 beschreibt ebenfalls PAMA-Plastisole bevorzugt mit basischen Comonomeren im Teilchengrößenbereich von 0,1 bis 200 µm, die vorzugsweise als Emulsionspolymerisate gewonnen werden. Teilchen von 0,1 bis 20 µm, insbesondere bis 10 µm, sind besonders bevorzugt, lassen sich aber nach dieser Druckschrift nur per Emulsionspolymerisation erzeugen. Eine weitere Modifikation der PAMA-Plastisole wird in DE-A 27 72 752 und 29 49 954 vorgeschlagen. Hier handelt es sich um Kern-Schalepolymerisate mit einem weichmacherverträglichen Kern und einer schlechter weichmachenden verträglichen Schale. In der US-A 4,558,084 wird ein Plastisol auf der Basis eines Copolymerisats aus Methylmethacrylat und Itaconsäure bzw. Itaconsäureanhydrid beschrieben, dem besonders gute Haftung auf elektrophoretisch vorbehandelten Metalloberflächen attestiert wird. In jüngerer Zeit sind Bodenbeläge auf Basis von PAMA-Plastisolen vorgeschlagen worden, bei denen ein reines Polymethylmethacrylat (PMMA) als Matrixmaterial zur Anwendung kommt, das teils in Form von Emulsionspolymerisat teils in Form von Suspensionspolymerisat eingesetzt wird (DE-A 39 03 669). Wie in der EP-A 0 477 708 gezeigt wurde, kann durch gleichzeitige Verwendung von sprühgetrockneten Polymerdispersionen und in Suspensionspolymerisation gewonnenem Perlpolymerisat, von denen mindestens eines ein Methylmethacrylat-Copolymerisat darstellt, ein Plastisol mit verbesserter Produktqualität und mit großer Anwendungsbreite gewonnen werden.
Weitere Arbeiten auf dem PAMA-Plastisolgebiet dienten der Verbesserung der Haftfestigkeit insbesondere auf metallischen Untergründen, beispielsweise durch Mitverwendung von 2,5 - 10 Gew.-% Polyamidharzen (Polyaminoamiden) (vgl. EP-A 0 533 026). Die EP-A 0 121 759 empfiehlt ebenfalls Polyamidharze als Schutzkolloide zur Verbesserung der Lagerstabilität von Plastisolen. Weitere Druckschriften zielen auf die Verbesserung der Hafteigenschaften, beispielsweise durch Einbau von u.a. Glycidyl(meth)acrylat in das PAMA-Polymer (US-A 5,120,795) oder auf die Verbesserung der Weichmacherverträglichkeit durch Einbau von Isobutylmethacrylat als Comonomer (EP-A 0 477 708; EP-A 0 539 031) ab.

### Aufgabe und Lösung

Ein Teil des Standes der Technik ist der Lösung einer der vordringlichsten Aufgaben der Plastisol-Chemie gewidmet, nämlich der Lagerstabilität. Genauer gesagt: An Plastisol-Pasten (bestehend aus festen Polymeren und Weichmachern) wird die Forderung gerichtet, einerseits genügende Lagerstabilität - ausgewiesen durch Viskositätskonstanz über einen längeren Zeitraum- aufzuweisen und andererseits die Fähigkeit zur Filmbildung nach längerem Erhitzen und anschließendem Abkühlen - den Bedingungen des Gelierungsprozesses - zu bewahren.

Die hierbei auftretenden technischen Probleme seien am Beispiel der PAMA-Plastisole näher erläutert. Die Verwendung von sprühgetrockneten Emulsionspolymerisaten in Kombination mit den üblichen Weichmachern führt nach allen Erfahrungen zu Plastisol-Pasten mit guten Filmbildeeigenschaften aber geringer Lagerstabilität. Wie in der EP-A 0 477 708 gezeigt wurde, erhöht der Zusatz von Perlpolymerisaten die Lagerstabilität solcher Pasten ohne sich deutlich negativ auf die Filmbildungseigenschaften auszuwirken.
Dagegen bilden Abmischungen von Perlpolymerisaten mit Weichmacher zwar genügend viskositätsstabile Pasten, eine befriedigende Filmbildung konnte aber mit dieser Kombination bislang nicht erzielt werden. Obschon die Kombination aus sprühgetrockneten PAMA-Emulsionspolymerisaten und PAMA-Perlpolymerisaten technisch einwandfreie Resultate liefert, stellte doch die Kombination dieser nach völlig verschiedenen Herstellungsverfahren gewonnenen Ausgangsprodukte die Praxis vor Probleme der Bereitstellung und der Anpassung der Weichmacher (wie auch der übrigen Zuschlagstoffe) an die spezifischen Eigenschaften der gegenüber den Weichmachern sich heterogen verhaltenden Polymerspecies. Aus diesen Gründen war ein Matrixpolymerisat einheitlicher Provenienz der Kombination verschiedenartiger Polymerer vorzuziehen. Es versteht sich, daß wesentliche Abstriche hinsichtlich der Lagerstabilität, des Viskositätsverhaltens und der Filmbildungseigenschaften nicht hingenommen werden konnten.
Es wurde nun gefunden, daß Plastisole, speziell PAMA-Plastisole gemäß der vorliegenden Erfindung die dargelegten Anforderungen der Technik weitestgehend erfüllen.

Die vorliegende Erfindung stellt der Technik die Polymermaterialien in einer für die Anwendung in Plastisolen besonders günstigen Form zur Verfügung, nämlich in Form mechanisch zerkleinerter Perlpolymerisate. Die vorliegende Erfindung eignet sich somit für all diejenigen Fälle, in denen Perlpolymerisate von Polymerarten zugänglich sind, die sich gleichzeitig für die Herstellung von Plastisolen eignen.
Im allgemeinen weisen die infrage kommenden Polymerisate eine Glastemperatur T_{g} von ≥ 35 Grad C auf. Sie liegt vorzugsweise im Bereich ≥ 50 Grad C, insbesondere im Bereich ≥ 70 Grad C. Insbesondere betrifft die vorliegende Erfindung durch Weichmacherzusatz weichgemachte thermisch verfilmbare Massen M auf Poly(meth)acrylatbasis, wobei die Massen M neben an sich üblichen Weichmachern Füll- und Zuschlagstoffe, vorzugsweise aus einem mittels Perlpolymerisation hergestellten Polymeren P, aufgebaut aus
a-1) 50 - 100 Gew.-% Methylmethacrylat
a-2) 0 - 50 Gew.-% mindestens eines von Methylmethacrylat verschiedenen Monomeren der Formel I 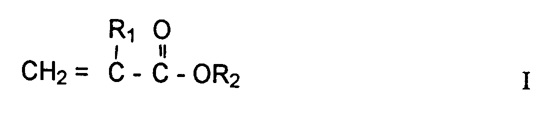 worin
   R₁ für Wasserstoff oder Methyl und
   R₂ für einen gegebenenfalls verzweigten Alkylrest mit 1 bis 14, vorzugsweise 1 bis 6 Kohlenstoffatomen steht, und
a-3) 0 - 20 Gew.-% eines weiteren von a-1) und a-2) verschiedenen vinylischen Monomeren VM,
a-4) 0 - 20 Gew.-% eines haftungsvermittelnden Monomeren HM bestehen,
mit der Maßgabe, daß das Polymer P in Form von mechanisch zerkleinerten Perlpolymerpartikeln PP eingesetzt wird. In der Regel ergänzen sich die Bestandteile a-1) bis a-3) der Polymeren P zu 100 Gew.-%. Die in Suspensionspolymerisation hergestellten Perlpolymerisate besitzen eine ursprüngliche Perlgröße im Bereich 50 bis 100 µm. Die mechanisch zerkleinerten Perlpolymerpartikel PP können durch die verschiedenen technischen Zerkleinerungsverfahren für Polymerpartikel gewonnen werden (vgl. Ullmann's Encyclopedia of Industrial Chemistry, 5th. Ed. Vol. A20, pg. 668, VCH 1992), in einfachster Weise durch Mahlen.
Als Anhalt der Partikelgröße für die durch mechanische Zerkleinerung gewonnenen Perlpolymerpartikel PP sei ein Bereich von 10 bis 30, vorzugsweise 10 bis 30 µm für die jeweils größte Abmessung genannt.
Vorzugsweise liegt der Anteil des Methylmethacrylats an P im Bereich 60 bis 100, insbesondere 70 bis 95 Gew.-%, umgekehrt liegt der Anteil an den von Methylmethacrylat verschiedenen Monomeren bevorzugt bei 5 bis 30 Gew.-%.
Besonders bevorzugt ist beispielsweise der Fall, daß R₂ in der Formel I für einen Isobutylrest, gegebenenfalls auch einen n-Butylrest, steht. Definitionsgemäß dürfen in Formel I R₁ und R₂ nicht gleichzeitig für Methyl stehen, wohl aber kommt Methylacrylat als Monomer der Formel I in Frage.

Unter den haftungsverbessernden Monomeren HM als Bestandteile der Polymeren seien solche radikalisch polymerisierbaren Monomeren verstanden, welche funktionelle Gruppen besitzen, die mit den Materialien, die beschichtet werden sollen, in Wechselwirkung treten können. Eine derartige Wechselwirkung kann z.B. durch Wasserstoffbrückenbildung, Komplexierung, Dipolkräfte u.ä. zustande kommen, an denen in der Regel Heteroatome wie Stickstoff oder Sauerstoff beteiligt sind. Genannt seien als funktionale Gruppen die Aminoinsbesondere die Dialkylamino-, (cyclische) Amid-, Imid-, Hydroxy-, Oxy-, Carboxyl-, Cyano-Gruppe. Derartige Monomere sind an sich bekannt (vgl. H. Rauch Puntigam, Th. Völker, Acryl- und Methacrylverbindungen, Springer-Verlag 1967; Kirk-Othmer, Encyclopedia of Chemical Technology, 3rd. Ed., Vol. 1, pp. 394 - 400, J. Wiley 1978: DE-A 25 56 080; DE-A 26 34 003).
Vorzugsweise gehören die haftungsverbessernden Monomeren HM daher der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl- und der Aminoalkylsubstituierten Ester oder Amiden der Acryl- und Methacrylsäure an.
Als Stickstoff-heterocyclische Monomere HM seien insbesondere solche aus der Klasse der Vinylimidazole, der Vinyllactame, der Vinylcarbazole und der Vinylpyridine genannt. Beispiele, die keinerlei Beschränkung darstellen sollen, für diese monomeren Imidazolverbindungen sind N-Vinyl-imidazol (auch Vinyl-1-imidazol genannt), N-Vinyl-methyl-2-imidazol, N-Vinyl-äthyl-2-imidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5,5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allylcaprolactam, N-Vinylcapryllactam.
Unten den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol. Unter den copolymerisierbaren vinylischen Carbonsäuren seien insbesondere die Acryl- und die Methacrylsäure bzw. geeignete Salze derselben genannt.
Ferner seien die folgenden oxy- bzw. alkoxysubstituienen Alkylester der (Meth)acrylsäure angeführt: 2-Hydroxyethyl-(meth)acrylat, Hydroxypropyl(meth)acrylat, 2-Methoxy-ethyl(meth)acrylat, 2-Ethoxyethyl(meth)acrylat, 2-Butoxyethyl(meth)acrylat, 2-(2-Butoxyethoxy)ethylmeth-acrylat, 2-(Ethoxyethyloxy)ethyl(meth)acrylat, 4-Hydroxybutyl(meth)acrylat, 2-[2-(2-Ethoxy-ethoxy)ethoxy]-ethyl(meth)acrylat, 3-Methoxybutyl-1-(meth)acrylat, 2-Alkoxymethylethyl(meth)acrylat, 2-Hexoxyethyl(meth)acrylat.
Weiterhin seien die folgenden aminsubstituierten Alkylester der (Meth)acrylsäure genannt:
2-Dimethylaminoethyl(meth)acrylat, 2-Diethylaminoethyl-(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.-Butylaminoethyl(meth)acrylat, 3-(Dimethylamino)propyl-(meth)acrylat, 2-(Dimethylaminoethoxyethyl)-(meth)acrylat.

Als Vertreter der (Meth)acrylamide seien beispielsweise die folgenden Monomeren genannt:
N-Methyl(meth)acrylamid, N-Dimethylaminoethyl(meth)-acrylamid, N-Dimethylaminopropyl(meth)acrylamid, N-Isopropyl(meth)acrylamid, N-tert.Butyl(meth)acrylamid, N-Isobutyl(meth)acrylamid, N-Decyl(meth)acrylamid, N-Cyclohexyl(meth)acrylamid, N-[3-(Dimethylamino)2,2-dimethylpropyl]-methacrylamid, N-[2-Hydroxyethyl](meth)-acrylamid.
Die Herstellung der Perlpolymerisate P wird in an sich bekannter Weise durch Suspensionspolymerisation vorgenommen (Houben-Weyl, 4. Auflage, Bd. XIV/1, S. 406-433, Georg Thieme Verlag 1961 und Bd. E20, 1149 - 1154, Georg Thieme Verlag 1987, vgl. DE-C 28 5506; DE 90 7827). Bei der Suspensionspolymerisation werden die Monomeren (disperse Phase) unter Rühren in Wasser (kontinuierliche Phase) mit Hilfe von Dispergatoren bzw. Schutzkolloiden verteilt und mittels Initiatoren polymerisiert, die in den Monomeren löslich sind. Als Dispergatoren kommen bekanntlich anorganische Stoffe wie (kolloidales) Aluminiumhydroxyd, aber auch hochmolekulare Naturstoffe oder synthetische Polymere infrage.

Das Verhältnis der wäßrigen zur Monomerphase liegt meistens bei 2 : 4 bis 4 : 1 Gew.-Teilen. Als Starter (Initiatoren) kommen insbesondere organische Peroxy- bzw. Azoverbindungen infrage, beispielsweise Acylperoxide wie Dibenzoylperoxid, Lauroylperoxid, tert.-Butylperpivalat in Mengen von 0,1 bis 0,7, vorzugsweise 0,2 - 0,5 Gew.-% bezogen auf die Monomeren.

Zur Herstellung der Polymerisate P kann das Molekulargewicht durch Zusatz von Reglern, gewöhnlich von Schwefelreglern, insbesondere von Alkylmercaptanen wie z.B. Dodecylmercaptan, Laurylmercaptan in Mengen von gewöhnlich ca. 0,05 bis 0,5 Gew.-% bezogen auf die Monomeren geregelt werden. Das Molgewicht liegt im allgemeinen im Bereich 20 000 bis 1 000 000.
Man erhält gewöhnlich 20 - 50 %ige Perlsuspensionen, aus denen sich die Polymerisatperlen durch Filtrieren, Dekantieren oder Zentrifugieren abtrennen lassen. Die Perlpolymerisate PP besitzen im allgemeinen eine Teilchengröße von 10 - 100 µm, vorzugsweise 40-60 µm.
Wie bereits erwähnt, besteht hinsichtlich der ohne Einschränkung geeigneten Weichmacher eine wesentlich größere Anwendungsbreite als bei dem unmittelbar vergleichbaren Stand der Technik. Primär kommen Weichmacher mit geringerer Polarität infrage, wie z.B. die Alkylester der Phthalsäure, der Adipinsäure, der Sebacinsäure, chlorierte Paraffine, Trialkylphosphate, aliphatische oder araliphatische Polyester neben Weichmachern mit mittlerer Polarität wie höhere Polyglykole, Phthalsäurepolyester oder Adipinsäurepolyester u.v.a.. Als ein Hinweis kann gelten, daß in der Regel auch alle für PVC geeigneten Weichmacher eingesetzt werden können, wobei die Gruppe der Phthalat-Weichmacher wegen ihrer herausragenden technischen Bedeutung besonders hervorzuheben ist.
Eine ausführliche Beschreibung geeigneter Weichmacher findet sich im Kunststoff-Handbuch, Herausg. H.K. Felger, Bd. 1/1 C, Hanser Verlag 1985 sowie in H.F. Mark et al. Encyclopedia of Polymer Science and Engineering, Supplemental Volume, pg. 568 - 647, J. Wiley 1989. Eine Auswahl geeigneter Weichmacher kann auch der DE-C 25 43 542 entnommen werden.

Besonders erwähnt seien das Diisodecylphthalat, Benzyloktylphthalat und Dioctylphthalat. Wie bereits vorstehend ausgeführt wurde, kommen die Weichmacher in Anteilen von 5 bis 200 Gew.-Teilen auf 100 Gew.-Teile der Polymeren P) zur Anwendung.
Üblicherweise gehören Füllstoffe zu den normalen Bestandteilen einer Plastisolrezeptur. Ihr Anteil beträgt im allgemeinen bis zu 400, vorzugsweise bis 200 Gew.-Teile pro 100 Gew.-Teile der Polymermasse. Die weitaus wichtigste Rolle spielt Kreide, daneben Baryt, Kaolin, Siliciumdioxid in verschiedenen Modifikationen, Silikate bzw. Sand, Talk, Tone wie Bentonit, Glaspulver, Aluminiumoxid bzw. hydratisierte Formen derselben, Titandioxid, Graphit, Ruß, sowie Farbstoffe bzw. Pigmente und Korosionsinhibitoren. Die Füllstoffe werden vorteilhaft in passender Partikelgröße, beispielsweise im Bereich 5 bis 30 µm angewendet. (Bestimmung nach Ullmanns Encyclopädie der techn. Chemie, 4. Auflage, Bd. 5, S. 725 - 752;) Die Korngrößenverteilung kann durch Messung der Lichtextinktion einer durch die Meßzelle eines Meßgeräts ("Kratel Partoskop F" der Kratel GmbH, Göttingen) strömenden Suspension der Teilchen in Wasser bestimmt werden. Die Füllstoffe können z.B. gefällt und/oder gemahlen und gegebenenfalls gecoatet sein.
Desweiteren können die Plastisole übliche Zusatzstoffe enthalten, zum Beispiel Viskositätsregler wie Emulgatoren und Silikone, Stabilisatoren gegen Hitze, Licht und Oxidation.
Auch die Herstellung von geschäumten Plastigelen durch Zusatz von Treibmitteln wie z.B. Azoverbindungen ist möglich.

### Herstellung der Perlpolymerisate

Die Perlpolymerisate werden in einem 100-1-V4A-Kessel mit Impellerrührer und Wellenbrecher hergestellt. Die Beheizung erfolgt durch einen Heizmantel mit Wasserumlauf. Die Apparatur ist mit Temperaturfühler, Rücklaufkühler und Einrichtung für die Spülung mit Inertgas ausgerüstet; die Rührgeschwindigkeit läßt sich über Getriebe variieren. Die Polymerisation wird in folgender Weise durchgeführt:
Zur Erzeugung des Verteilers (Suspensionsstabilisators) wird Aluminiumsulfat in der vorgelegten Gesamtmenge an entionisiertem Wasser unter Rühren, Durchleiten von Inertgas (N₂ bzw. CO₂) und Aufheizen auf Polymerisations-temperatur (65 bis 80 Grad C) gelöst und durch Zusatz wäßriger Sodalösung bis zum Erreichen eines pH-Wertes von 5,5 als Aluminiumhydroxyd ausgefällt. Zur Verbesserung der Verteilerwirkung werden 5 Gew.-%, berechnet auf Al(OH)₃, eines C14- bis C16-Alkylsulfonats in Form des Natriumsalzes zugesetzt.
In diese Verteilersuspension wird die Monomerenphase, die den Initiator und gegebenenfalls Molekulargewichtsregler und sonstige Zusätze, wie Weichmacher usw. in gelöster Form enthält, eingebracht und durch Scherwirkung des Rührers in Form feiner Tröpfchen dispergiert.
Die Drehzahl des Rührers ist in weiten Grenzen variierbar.
Voraussetzung ist, daß durch das Rührsystem neben der Dispergierung des Monomeren zu Tröpfchen gewünschter Größe eine so starke Vertikalumwälzung des Kesselinhaltes erfolgt, daß das durch Dichteunterschiede zwischen Wasser- und Monomerphase bedingte Aufrahmen bzw. Absinken der Monomertröpfchen verhindert wird.
Bei dem hier verwendeten Verhältnis zwischen Wasser- und Monomerphase von 3 : 1 ergibt sich folgende Ansatzgröße: 45 kg Wasser, 15 kg Monomere.

Während der Polymerisation wird die Temperatur der Umlaufheizung konstant gehalten. Die Innentemperatur zeigt innerhalb 30 bis 120 min 10 bis 20 Grad C über der Ausgangstemperatur an. Die erreichte Temperatur wird durch Regelung der Heizung etwa 2 Stunden konstant gehalten, danach wird der Ansatz auf etwa 25 Grad C abgekühlt und nach Auflösung des Verteilers durch Zusatz von Schwefelsäure auf einer Nutsche oder einem Dekanter von der Hauptmenge Wasser getrennt.
Durch Nachwaschen mit entionisiertem Wasser werden die löslichen Polymerisationshilfsstoffe entfernt. Der Anteil des im Perlpolymerisat verbleibenden Wassers läßt sich durch Varisation der Absaug- bzw. Schleuderbedingungen variieren. Die Bestimmung des Wasseranteils erfolgt gravimetrisch.
Die mittlere Teilchengröße der Polymerisatperlen wird mikroskopisch bestimmt.
Zur Kennzeichnung der Molekülgröße ist der bei 200 Grad C in Chloroform bzw. in Nitromethan gemessene n_{sp/C}-Wert (Makromolekulare Chemie 7, S. 294, 1952) geeignet. Die n_{sp/C}-Werte liegen im allgemeinen im Bereich 120 - 400 ml/g.

### Zerkleinern des Perlpolymerisats

Das Polymerisat, beispielsweise bestehend aus reinem Methylmethacrylat oder in Form eines Copolymerisats wird in einer geeigneten Mahlvorrichtung, beispielsweise einer Pralltellermühle gemahlen. Beispielsweise werden Perlen mit einer durchschnittlichen Ausgangskorngröße von ca. 45 µm bis zu einer Korngröße von ca. 11 µm gemahlen.

### Vorteilhafte Wirkungen

Die erfindungsgemäßen Plastisole sind für sämtliche Anwendungen geeignet, wie sie beipsielsweise als Anwendungsbereiche für PVC- und PAMA-Plastisole vorgezeichnet sind, insbesondere zur Beschichtung von Metaliblechen, speziell von Kataphoreseblechen. Besonders hervorgehoben sei die Anwendung als Laufschicht für Bodenbeläge durch Applikation auf einem gegebenen Träger. Weiterhin sind freie transparente Folien, die aus diesen Plastisolen hergestellt werden können, von technischem Interesse. Genannt seien außerdem noch die Anwendungen für Tapeten, Kunststoff-Planen (LKW-Planen), Autohimmel, Armaturenbrett-Verkleidungen u.v.a.m. Gegenüber den Massen des Standes der Technik (s. Stand der Technik) zeichnen sie sich durch verbesserte mechanische Eigenschaften wie z.B. besseres Rückstellverhalten aus. Von besonderem Gewicht ist auch das verbesserte Weichmacher-Rückhaltevermögen.

Die folgenden Beispiele dienen zur Erläuterung der Erfindung.
I. Herstellung der zerkleinerten Perl-Polymerisate PP
   Ein auf Basis von reinem Methylmethacrylat aufgebautes Perlpolymerisat P mit einem η_{sp/C} -Wert von ∼ 200 wurde in einer Pralltellermühle gemahlen:
   - Ausgangskorngröße:: ∼ 45 µm
   - Korngröße nach der Mahlung:: ∼ 11 µm
   Aus dem so hergestellten Polymerpulver PP wurden im Vergleich zum nicht gemahlenen Perpolymerisat P und einem durch Emulsionspolymerisation und anschließender Sprühtrocknung isolierten Polymerisats Plastisole hergestellt und dieselben auf ihre anwendungstechnischen Eigenschaften untersucht.
II. Herstellung der Plastisole
   Die Polymeren wurden mit Benzyloktylphthalat als Weichmacher gemischt, auf dem Dreiwalzenstuhl dispergiert und anschließend in einem Vakuummischer entgast.
   Die Plastisolmassen wurden mit Hilfe einer Rakel auf "teflonisierte" Metallbleche aufgetragen und 10 min. bei 180°C in einem Elektroofen geliert.
   Beurteilt wurde das optische Aussehen der flüssigen Plastisole, das Aussehen der gelierten Filme und die Weichmacherauswanderung aus dem Film
   Ferner wurden die Filme auf ihre Zugfestigkeit und Bruchdehnung untersucht.
III Ergebnisse (siehe Tabelle)
   Während bei Verwendung der normalen, nicht gemahlenen Perlpolymerisate P, wie zu erwarten inhomogene Massen entstehen, bei denen die Perlen nach Lagerung absetzen, sind die Mischungen aus gemahlenem Perlpolymerisat PP (bzw. dem sprühgetrockneten Emulsionspolymerisat) und Weichmacher auch nach längerer Lagerung noch homogen. Nach Auftrag der Massen und anschließender Gelierung werden mit Plastisolen auf Basis der gemahlenen Perlpolymerisate und der sprühgetrockneten Emulsionspolymerisate klare oberflächenglatte, zusammenhängende Filme erzielt, nicht dagegen bei Verwendung von Mischungen aus Perlpolymerisaten und Weichmachern.
   Da das Polymere bei diesen Mischungen während des Geliervorgangs nicht genügend angequollen wird, wird eine klebrige, flüssige Weichmacherschicht mit lose eingelagerten Pulvern, d. h. kein zusammenhängender Anstrich erhalten.
   Hinsichtlich Weichmacherauswanderung, Bruchdehnung und Zugestigkeit werden mit dem gemahlenen Pulvern praktisch die gleichen Werte erzielt, wie mit sprühgetrokneten Emulsionspolymerisaten.

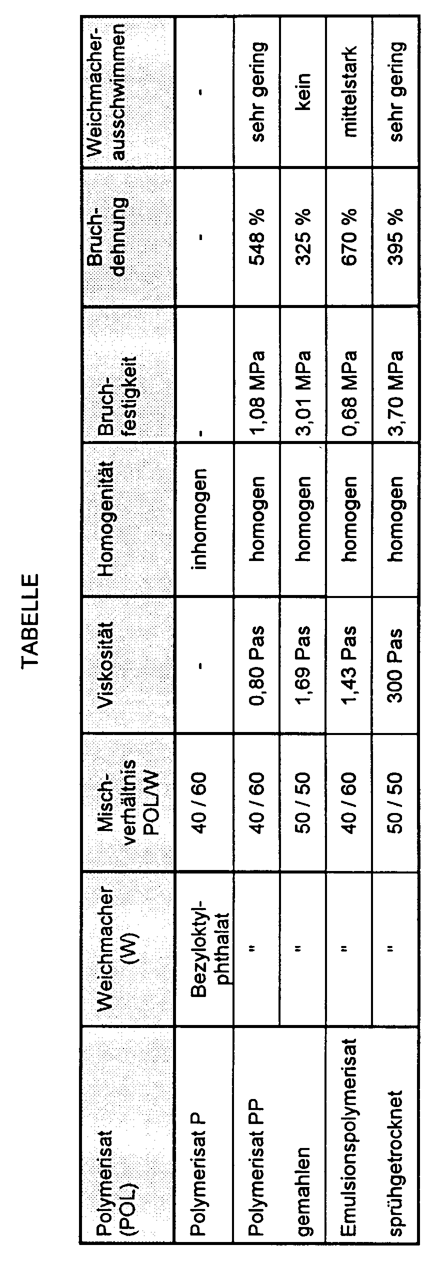

## Patentansprüche

1. Durch Weichmacherzusatz weichgemachte, thermisch verfilmbare Polymermassen M, die neben an sich üblichen Weichmachern noch Füll- und Zuschlagstoffe enthalten können,
dadurch gekennzeichnet,
daß die thermisch verfilmbaren Polymermassen aus einem in Suspensionspolymerisation hergestellten, mechanisch zerkleinerten Perlpolymerisat P bestehen.

2. Durch Weichmacherzusatz weichgemachte, thermisch verfilmbare Polymermassen M gemäß Anspruch 1, dadurch gekennzeichnet, daß die Perlpolymerisate P eine Glastemperatur Tg von ≥ 35 Grad C besitzen.

3. Durch Weichmacherzusatz weichgemachte, thermisch verfilmbare Polymermassen M gemäß den Ansprüchen 1 und 2, dadurch gekennzeichnet, daß die Perlpolymerisate P Poly(meth)acrylate sind.

4. Durch Weichmacherzusatz weichgemachte, thermisch verfilmbare Polymermassen M gemäß den Ansprüchen 1 - 3, dadurch gekennzeichnet, daß die mechanisch zerkleinerten Perlpolymerisate P durch Zerkleinerung von Polymerisatperlen im Bereich 50 bis 100 µm gewonnen werden.
